# EUROPÄISCHE PATENTANMELDUNG

(11) **EP 3 454 150 A1**
(43) Veröffentlichungstag der Anmeldung: **13.03.2019**
(21) Anmeldenummer: 17189639.2
(22) Anmeldetag: 06.09.2017
(51) Int. Cl.: G05B 19/418

(54) **VERFAHREN UND VORRICHTUNGEN ZUM ERZEUGEN EINES DATENMODELLS ZUR ÜBERWACHUNG EINER INDUSTRIELLEN ANLAGE**

(71) Anmelder: Siemens Aktiengesellschaft, 80333 München (DE)
(72) Erfinder: Makuth, Jens, 90537 Feucht (DE)

(57) **Zusammenfassung**

Die Erfindung betrifft ein Verfahren zum Erzeugen eines Datenmodells (AM) zur Überwachung einer industriellen Anlage (A), wobei vor Ort in der Anlage (A) ein, bspw. zwei- bzw. dreidimensionales, Abbild (AB1, AB2) wenigstens eines Teils der Anlage (A) erfasst wird (V1), wobei das Abbild (AB1, AB2) dazu dient, ein zu der Anlage (A) gehörendes Datenmodell (AM) zu erzeugen und/oder zu erweitern (V5).

## Beschreibung

Die Erfindung bezieht sich auf Verfahren und Vorrichtungen zum Erzeugen eines Datenmodells zur Überwachung einer industriellen Anlage.

Zustandsüberwachung, zu englisch: Condition Monitoring (CM), in der Industrie dient dem Zweck, den "Gesundheitszustand" von Komponenten, Maschinen, Assets und Anlagen zu beobachten und durch Analyse von CM-bezogenen Daten Aussagen zu Veränderungen dieses Zustandes zu treffen. Zu diesem Zweck werden Industrial-Internet-Of-Things-Plattformen, kurz: IIoT-Plattformen, wie bspw. die MindSphere der Firma Siemens, genutzt, um von Geräten übermittelte Daten zu erfassen, dezentral zu speichern, Rohdaten zu visualisieren, Daten zu analysieren, und/oder Ergebnisse der Analyse zu visualisieren.

Die kontinuierliche Zustandsüberwachung und Analyse wichtiger Parameter einer industriellen Anlage, wie bspw. einem Stromnetz, hilft, mögliche Schäden vorherzusagen und so im Idealfall gar nicht erst auftreten zu lassen. Beispielsweise können Sensoren Messwerte (z.B. Kühltemperatur oder Ölqualität eines Transformators, Gasdruck bei Schaltanlagen, Anzahl erfolgter Schaltvorgänge, mechanische Spannung und Strombelastung von Freileitungen, etc.) an unterschiedlichen Stellen in der Anlage aufnehmen und diese an eine Auswerteeinheit, wie bspw. das jeweilige Condition-Monitoring-System (CMS) weiterleiten. Zumindest ein Teil der Messdatenverarbeitung kann dabei durch die Auswerteeinheit erfolgen. Dazu können etwa Überwachungsfunktionen, wie bspw. Trendanzeigen, Prognosen sowie das Aufzeichnen von Rohdaten, zählen.

Die Prozessgeräte, also die Datenlieferanten, sind häuFIG komplex und teilweise räumlich ausgedehnt bzw. verteilt. Beispiele für solche Prozessgeräte sind Werkzeugmaschinen, Papiermaschinen, Pressen, verteilte Prozessautomatisierungskomponenten etc. Im Fall von CM werden in der Regel an das Prozessgerät eine Reihe von zusätzlichen Sensoren angeschlossen, die verschiedene Formen von Condition Monitoring, zum Beispiel das Überwachen von Strom, Spannung, Drehzahl, Drehmoment, Vibrationen, Entladungen, Temperatur, Magnetfeld etc., das Überwachen von Temperatur, Druck, Feuchte, Taupunkt, Licht, UV etc., oder das Überwachen von Durchfluss, Druck, Acoustic Emission, Kavitation etc. erlauben. In Summe ergibt dies eine Menge an Datenpunkten (= Datenquellen), die in der Auswerteeinheit, wie bspw. einer IIoT-Plattform, abgebildet werden, eine Entsprechung haben müssen. Diese Datenpunkte werden oftmals durch kryptische oder schwer lesbare Zeichenketten repräsentiert. Wenn man Analyse allgemein oder vorrausschauende Analyse im Speziellen betreiben will, ist profundes Wissen über die Anwendung, um die Physik im Kontext der Anwendung und der Umgebungsbedingungen und um die Bedeutung der Datenpunkt-Bezeichnungen zu verstehen notwendig.

Es ist daher Aufgabe der vorliegenden Erfindung Prozessgeräte einer industriellen Anlage zu identifizieren und Kontextinformationen zu den von den Prozessgeräten erhaltenen Daten bereitzustellen.

Die Aufgabe wird durch ein erstes Verfahren zum Erzeugen eines Datenmodells zur Überwachung einer industriellen Anlage gelöst, wobei vor Ort in der Anlage ein, bspw. zwei- bzw. dreidimensionales, Abbild wenigstens eines Teils der Anlage erfasst wird, wobei das Abbild dazu dient, ein zu der Anlage gehörendes Datenmodell zu erzeugen und/oder zu erweitern.

Die Aufgabe wird ferner durch eine erste Vorrichtung, vorzugsweise ein Bediengerät, zur Durchführung der Verfahrensschritte des ersten Verfahrens gelöst.

Die Aufgabe wird ferner durch ein zweites Verfahren zum Erzeugen eines Datenmodells zur Überwachung einer industriellen Anlage gelöst, wobei mittels eines vor Ort in der Anlage erfassten, bspw. zwei- bzw. dreidimensionales, Abbilds wenigstens eines Teils der Anlage ein zu der Anlage gehörendes Datenmodell, vorzugsweise in einer von der Anlage entfernten Auswerteeinheit, erzeugt und/oder erweitert wird.

Die Aufgabe wird ferner durch eine zweite Vorrichtung, vorzugsweise eine Auswerteeinheit, zur Durchführung der Verfahrensschritte des zweiten Verfahrens gelöst.

Die Aufgabe wird ferner durch eine Anordnung umfassend die erste Vorrichtung sowie die zweite Vorrichtung gelöst.

Die vorliegende Erfindung wird anhand nachfolgender Zeichnungen näher erläutert.
- FIG. 1: zeigt eine schematische Darstellung einer industriellen Anlage.
- FIG. 2: zeigt eine schematische Darstellung einer Bedienperson beim Erfassen eines Abbilds eines Teils einer industriellen Anlage bzw. beim Erfassen einer Kennung des Prozessgeräts.
- FIG. 3: zeigt eine schematische Darstellung des Erfassens eines Abbilds einer industriellen Anlage vermittels eines Bediengeräts.
- FIG. 4: zeigt eine schematische Darstellung von Zusatzinformationen zu einem Prozessgerät.
- FIG. 5: zeigt eine schematische Darstellung eines Anlagenmodells zur Überwachung einer industriellen Anlage.
- FIG. 6: zeigt eine schematische Darstellung einer Ausführungsform zur Durchführung eines Verfahrens, bspw. vermittels eines Bediengerätes, zur Überwachung einer industriellen Anlage.
- FIG. 7: zeigt eine schematische Darstellung einer weiteren Ausführungsform zur Durchführung eines Verfahrens, bspw. vermittels eines Bediengerätes, zur Überwachung einer industriellen Anlage.
- FIG. 8: zeigt eine schematische Darstellung einer Ausführungsform zur Durchführung eines Verfahrens, bspw. vermittels einer Auswerteeinheit, zur Überwachung einer industriellen Anlage.
- FIG. 9: zeigt eine schematische Darstellung einer weiteren Ausführungsform zur Durchführung eines Verfahrens, bspw. vermittels einer Auswerteeinheit, zur Überwachung einer industriellen Anlage.
- FIG. 10: zeigt eine schematische Darstellung eines Bediengerätes zur Durchführung eines Verfahrens zur Überwachung einer industriellen Anlage.
- FIG. 11: zeigt eine schematische Darstellung einer Auswerteeinheit zur Durchführung eines Verfahrens zur Überwachung einer industriellen Anlage.

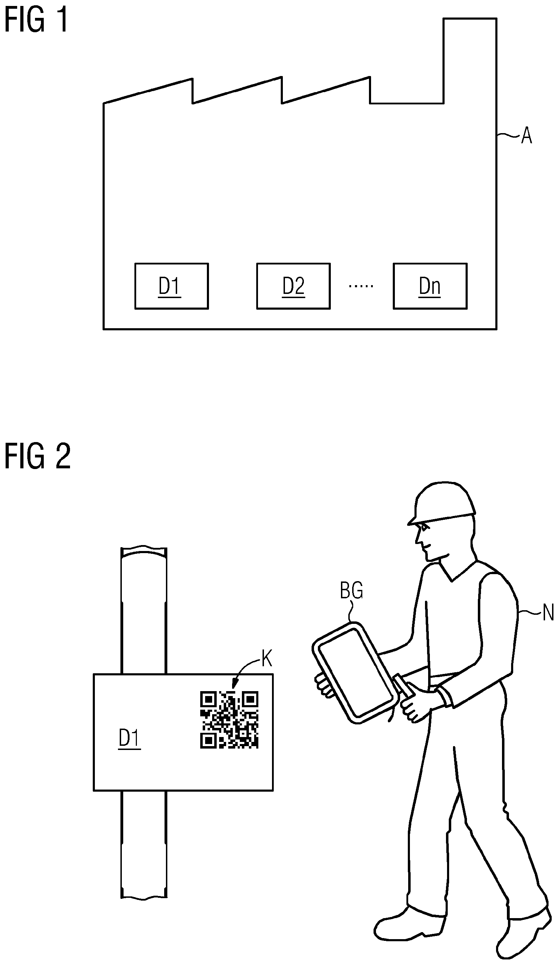

FIG. 1 zeigt eine schematische Darstellung einer industriellen Anlage A. Eine industrielle Anlage A kann dabei bspw. mehrere Prozessgeräte D1, D2, ..., Dn umfassen, die gemeinsam oder einzeln zur Durchführung eines in der Anlage A ablaufenden, bspw. automatisierten, Prozesses dienen. Bei einem Prozessgerät D1 kann es sich bspw. um einen Sensor oder einen Aktor handeln. Vermittels des Prozessgerätes D1 kann bspw. eine Automatisierungskomponente ausgeführt werden oder das Prozessgerät D1 kann zum Ausführen zumindest eines Teils einer Automatisierungskomponente dienen.

Von einem oder mehreren der Prozessgeräte D1, D2, ..., Dn können Daten, wie bspw. Messwerte oder sonstige Zustandswerte, übermittelt werden. Zu diesem Zweck kann bspw. ein Prozessgerät D1 eine entsprechende Kommunikationsschnittstelle, nicht gezeigt, aufweisen, die dem Empfang und/oder der Übertragung von prozessbezogenen Daten dient. Die von einem Prozessgerät D1 stammenden Daten können bspw. von einer Steuer- und/oder Regeleinheit empfangen werden, welche bspw. dazu dient, den in der Anlage ablaufenden Prozess zu steuern und/oder zu regeln. Zusätzlich oder alternativ können die Daten an eine Auswerteeinheit übertragen werden, die dazu dient, ein oder mehrere Prozessgeräte, eine Automatisierungskomponente und/oder den in der Anlage ablaufenden Prozess zu überwachen. Bspw. kann es sich dabei um eine (softwarebasierte) CM-Lösung handeln.

Um sinnvoll mit den erfassten Daten umzugehen, muss, bspw. in der Auswerteeinheit, bestimmtes Zusatzwissen vorliegen bzw. eine oder mehrere Zusatzinformationen bekannt sein. Insbesondere kann es erforderlich sein, dass der Kontext der Anwendung bekannt sein muss("was passiert / soll ablaufen"), und/ oder Art, Werte und Messbereich der verbauten Prozessgeräte bekannt sein muss, bspw. ein sog. Sensor-Profil, und/oder eine visuelle Präsentation der Anwendung sollte vorliegen (z.B. 2D, 3D-Modell, -Bild), und/oder der Ein-/ Anbau-Ort von Sensoren, und/oder Lage, Position, Befestigung von Sensoren, und/oder Verteildichte von Sensoren und/oder Wertebereiche von physikalischen Parametern der Applikation. Diese Zusatzinformationen werden unter Umständen nicht nativ bzw. nicht automatisch an eine Auswerteeinheit, wie bspw. eine IIoT-Plattform, übergeben und dort gemeinsam mit den erfassten Daten zur Anwendung gespeichert. Art, Erscheinung, Inhalt, Semantik einer Anwendung sollte aber vorzugsweise automatisch an eine Auswerteeinheit, wie bspw. eine IIoT-Plattform, mit den Daten übergeben werden. Kurzum, unter Umständen sind keine Kontextinformationen zu den gesammelten

Daten in einer Auswerteeinheit, wie bspw. einer IIoT-Plattform, verfügbar

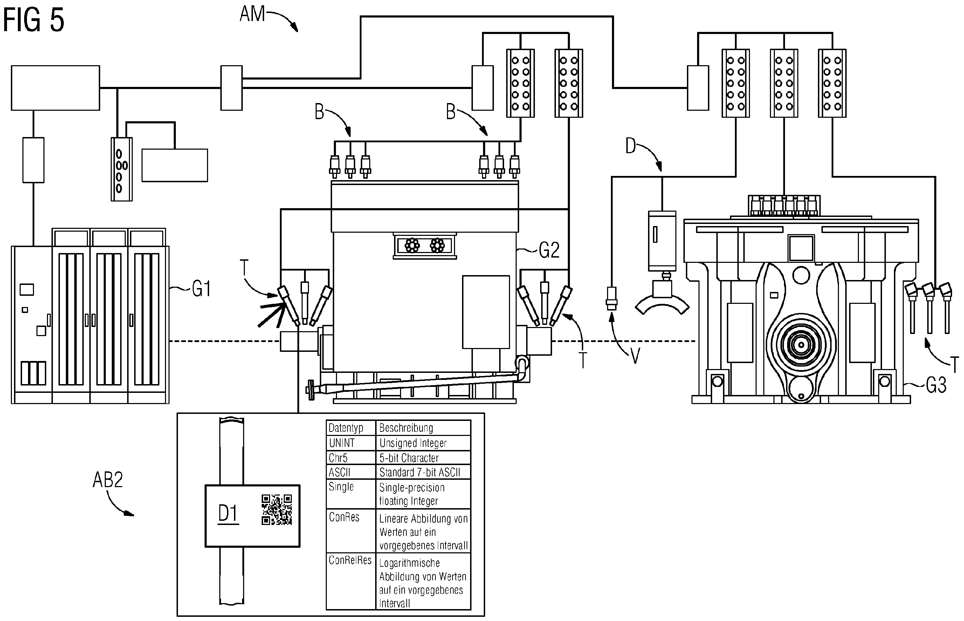

In einer Auswerteeinheit kann ein Datenmodell (bzw. Objektmodell) die Basis für eine oder mehrere (softwarebasierte) Anwendungen, wie eine CM-Lösung, bspw. der Berechnung von Trends und Prognosen, sein. Außerdem können auf einem Datenmodell auch (graphische) Topologie-Anzeigen einer industriellen Anlage basieren; sie können zum Beispiel Standorte wie Unterstationen, Schaltstationen sowie Kraftwerke samt der dort installierten Geräte und einer entsprechenden Status-Propagierung enthalten. Ein solches Datenmodell ist bspw. in FIGur 5 dargestellt.

Das Datenmodell kann dabei einem Prozessgerät D1 der Anlage zugeordnet sein, wobei besonders bevorzugt das Datenmodell Teil eines Anlagenmodells der industriellen Anlage A ist. Prozessbezogene Daten können erfasst und über ein bspw. semantisches Datenmodell der realen Produktion zugeordnet werden, um eine sichere Verknüpfung zwischen Produkt und prozessbezogenen Daten herzustellen. Dadurch entsteht ein (softwarebasiertes) Modell der Anlage, ein Anlagenmodell, ein solches Modell ist auch als Digitaler Schatten bzw. Digitaler Zwilling bekannt. Die Verwendung von Digitalen Zwillingen für die vorausschauende Wartung ist bspw. aus der US-Offenlegungsschrift US 2016247129 A1 bekannt geworden. Das Datenmodell eines Digitalen Zwillings wird dabei genutzt, um eine möglichst energieeffiziente Gerätewartung zu erreichen.

Eine Überwachungsanwendung, wie bspw. eine CM-Lösung, muss ggf. anwendungsspezifisch für den Einsatzfall entwickelt, zusammengestellt und konFIGuriert werden. Dabei können die verwendeten Prozessgeräte, wie bspw. Sensoren, mit einer Kennzeichnung, wie bspw. optisch auswertbaren Merkmal (QR-Code) ausgestattet werden, wenn ein solches nicht schon an dem Prozessgerät vorhanden ist. Dadurch kann ein Prozessgerät, wie bspw. ein Sensor, später über eine eindeutige Nummer (z.B. eine Produktnummer oder eine maschinenlesbare Fabrikatebezeichnung (MLFB)) identifiziert werden. Diese Nummer oder eine andere Kennung kann bspw. in dem QR-Code oder in einem anderen Kennzeichen enthalten sein und/oder dem Prozessgerät D1 zugeordnet werden können.

FIG. 2 zeigt eine schematische Darstellung einer Bedienperson N beim Erfassen eines Abbilds eines Teils einer industriellen Anlage bzw. beim Erfassen einer Kennung des Prozessgeräts D1. Anstelle mittels einer Bedienperson kann auch eine automatisierte Erfassung, bspw. vermittels einer Drohne, erfolgen.

Zur Erfassung kann ein Bediengerät BG verwendet werden, welches bspw. über eine Bilderfassung, wie bspw. eine Kamera, verfügt. Über eine solche Bilderfassung kann ein zwei- bzw. dreidimensionales Abbild eines Teils einer Anlage A, wie sie bspw. in FIGur 1 gezeigt ist, erfolgen. Insbesondere kann eine fotographische Aufnahme erstellt werden. Über das Abbild kann dann eine Information über die Umgebung eines Prozessgerätes D1 in der Anlage erfasst werden. Beispielhaft ist dazu in FIGur 2 ein an einer Rohrleitung installiertes Prozessgerät D1 dargestellt. Ferner kann mittels des Bediengerätes BG eine Kennzeichnung K des Prozessgerätes D1 erfasst werden. Hierbei kann es sich wie in FIGur 2 beispielhaft gezeigt, um einen auf dem Prozessgerät D1 aufgebrachten QR-Code handeln. Aus der Kennzeichnung K kann dann die Kennung extrahiert werden. Vermittels der Kennung des Prozessgerätes D1 kann eine Zusatzinformation des Prozessgerätes D1 abgerufen und/oder erhalten werden. Ein Prozessgerät D1 kann auch über einen daran angebrachten Schriftzug der bspw. Typ, Model und/oder Seriennummer des Prozessgerätes D1 enthält identifiziert werden. Dies kann bspw. durch eine Bilderkennung, d.h. durch eine (softwarebasierte) Anwendung auf dem Bediengerät BG, erfolgen.

In dem erfassten Abbild kann nunmehr die Position eines Prozessgerätes festgelegt werden. Dies kann bspw. erfolgen, indem die Bedienperson N durch Berühren eines Bereichs des Abbildes auf dem Bediengerät BG, bspw. auf einem Touchscreen des Bediengerätes BG, eine Position festlegt. Es ist jedoch auch möglich die Position in dem Abbild durch andere Eingabemittel, wie bspw. einen Eingabestift oder eine Computermaus, festzulegen. Auch in diesem Fall ist die automatisierte Erkennung vermittels einer Bilderfassung und/oder Bildauswertung durch die (softwarebasierte) Anwendung auf dem Bediengerät BG möglich.

Ferner kann es vorgesehen sein, anhand einer vorgegebenen Liste von Prozessgeräten, bspw. einer Stückliste von in der Anlage enthaltenen Prozessgeräten, die Position von Prozessgeräten in dem Abbild festzulegen. Wenn bspw. bereits ein digitales 2D- oder 3D-Abbild des zu überwachenden Prozessgerätes und/oder der Anlage (z.B. eine Presse, ein Antriebsstrang etc.) existiert, wird dieses auf ein Bediengerät BG, wie bspw. ein mobiles Gerät, geladen. Falls ein solches Abbild nicht schon vorhanden ist, kann die zu überwachende Anlage A, bspw. mit der Kamera des Bediengerätes BG, gescannt und ein 2D- oder 3D-Modell erstellt und weiterverarbeitet werden. Die Position eines oder mehrerer Prozessgeräte D1 in der Anlage A kann dann in das 3D-Abbild eingetragen werden (automatisch per Bilderkennung oder per Hand). Dafür wird bspw. zunächst ein Prozessgerät, dem bspw. eine Kennung zugeordnet werden soll bzw. dessen Gerätemodell erzeugt und/oder erweitert werden soll, aus der Liste ausgewählt. Zusätzlich oder Alternativ kann durch Antippen einer Position in dem Abbild ein Prozessgerät gewählt werden. Dann kann, bspw. automatisch, auf Bilderfassung (Kamera) umgeschaltet werden, um eine Kennzeichnung des Prozessgerätes, wie bspw. den zugehörigen QR-Code, zu erfassen. Zur Erfassung von einem oder mehreren Prozessgeräten kann dabei bevorzugt zunächst eine Kennung eines Prozessgerätes bestimmt werden. Sodann wird bspw. eine graphische Repräsentation des Prozessgerätes erzeugt, und dieser Repräsentation eine Position in dem erfassten Abbild der Anlage zugewiesen, indem eine Position in dem Abbild festgelegt wird. Das Ergebnis ist dann ein Abbild, das eine Kennung des Prozessgerätes D1 und/oder dessen Position in dem Abbild enthält.

Das angereicherte Abbild kann anschließend an eine entfernte Auswerteeinheit (zur Überwachung zumindest eines Teils der Anlage) übertragen werden.

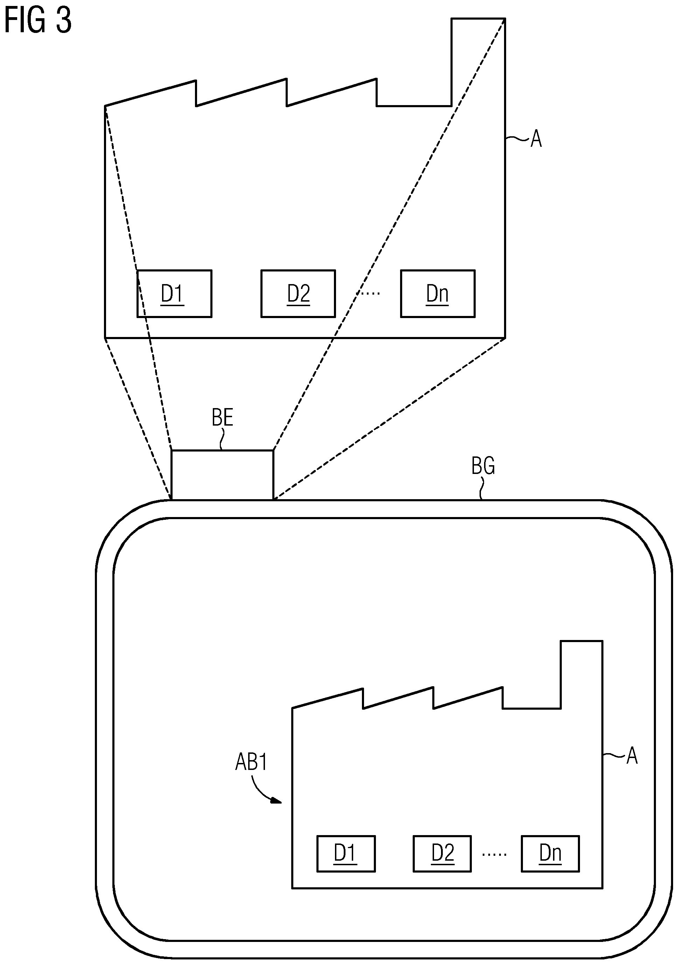

FIG. 3 zeigt eine weitere schematische Darstellung des Erfassens eines Abbilds AB1 einer industriellen Anlage A vermittels eines Bediengeräts BG.

Das Bediengerät BG kann eine Abbilderfassungseinheit, wie bspw. einen (CCD-) Bildsensor, aufweisen, vermittels der ein Abbild AB1 erfasst wird. Das erfasst Abbild AB1 kann dann bspw. auf einer Anzeigeeinheit des Bediengerätes BG dargestellt werden. Über die Anzeigeeinheit und/oder eine Bedieneinheit des Bediengerätes BG kann eine Bedienperson dann eine Eingabe vornehmen, wie bspw. ein Prozessgerät D1, ..., Dn auswählen und/oder eine Position eines Prozessgerätes, bspw. D1, festlegen.

Vermittels des Abbildes AB1 können, wie bspw. in FIGur 2 und FIGur 3 dargestellt, Informationen über die Umgebung des Prozessgerätes D1, ..., Dn in der Anlage A erfasst werden. Diese Informationen können dann zur Überwachung der Anlage A in einer Auswerteeinheit verwendet werden, indem diese Informationen bspw. in ein Datenmodell integriert werden.

Die Kennung, wie z.B. eine Produktnummer, eine Prozessgerätes D1, ..., Dn kann dabei aus der Kennzeichnung extrahiert werden und anschließend können aus einem elektronischen Katalog die entsprechenden Daten zum Profil des Prozessgerätes D1, ..., Dn abgeholt und dem jeweiligen Prozessgerät D1, ..., Dn zugeordnet werden. Nach Erfassung aller Prozessgeräte D1, ..., Dn kann das erfasste Abbild AB1 mit allen zugehörigen Informationen kompiliert und an eine Auswerteeinheit, wie bspw. die IIoT-Plattform "MindShpere" der Firma Siemens übertragen werden. Dort wird der "Digitale Zwilling"/ das angereicherte 3D-Modell der CM-Lösung dem virtuellen Maschinenabbild zugeordnet. In der Auswerteeinheit bzw. vermittels einer darauf ablaufenden (softwarebasierten) Anwendung kann der "Digitale Zwilling" mit Kontextinformationen parallel zur visuellen Analyse genutzt werden (Bereich, extra Tab oder Bild-in-Bild), um die erfassten Daten örtlich und semantisch zuordnen zu können, vgl. dazu FIG 5.

Auf dem Bediengerät BG können eine oder mehrere (softwarebasierte) Anwendungen vorhanden sein, die alleine oder gemeinsam zur Durchführung, der in der vorliegenden Offenbarung genannten Schritte dienen.

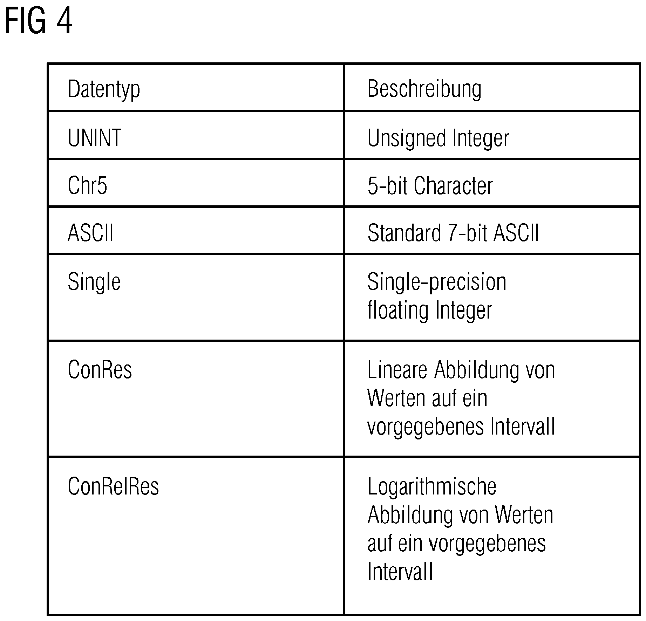

FIG. 4 zeigt eine schematische Darstellung von Zusatzinformationen zu einem Prozessgerät. Wie bereits beschrieben, können Prozessgeräte Daten ausgeben. Dabei ist es möglich, dass ein Prozessgerät unterschiedliche Datenformate und/oder Funktionen zur Abbildung der Aufgenommen Daten unterstützt. Problematisch hierbei ist, dass diese Funktionen einer Auswerteeinheit, bspw. zur Überwachung des Prozessgerätes und/oder der Anlage, nicht bekannt sind. Vermittels der erfassten Kennung des Prozessgerätes können diese Zusatzinformationen bspw. aus einer Datenbank, insbesondere vom Hersteller des Prozessgerätes, abgerufen werden.

FIGur 4 zeigt beispielhaft mehrere von einem Prozessgerät unterstützte Datenformate. Diese Zusatzinformationen können, nachdem sie beispielsweise von dem Bediengerät und/oder der Auswerteeinheit abgerufen wurden, zusammen mit dem erfassten Abbild der Anlage in der Auswerteeinheit gespeichert werden und einem Datenmodell des Prozessgerätes und/oder der Anlage zugeordnet werden.

Damit stehen in der Auswerteinheit Zusatzinformationen zu dem Prozessgerät und/oder der Anlage zur Verfügung, die zum Zwecke der Zustandsüberwachung, d.h. der CM-Lösung, verwendet werden können.

FIG. 5 zeigt eine schematische Darstellung eines Anlagenmodells AN zur Überwachung einer industriellen Anlage. Das Anlagenmodell AN umfasst hier beispielhaft eine Darstellung einer Antriebsüberwachung. Dieses Anlagenmodell AN steht, bspw. zu Condition-Monitoring Zwecken, einem technischen Experten zur Verfügung. Zu einem Prozessgerät D1 lassen sich über das Anlagenmodell AN bzw. das Datenmodell zu dem Prozessgerät nun, bspw. über das Abbild AB2, die Zusatzinformationen, wie bspw. die von dem Prozessgerät D1 unterstützten Datenformate abrufen. Ferner kann das in der Anlage vor Ort erfasste Abbild AB2 von dem Prozessgerät angezeigt werden. Vorliegend umfasst die überwachte Anlage eine Steuerung G1, einen Motor G2 und ein Getriebe G3, wobei sowohl am Motor G2 als auch am Getriebe G3 mehrere Sensoren, wie bspw. Temperatursensoren T, Beschleunigungssensoren B und Drehmomentsensoren D, sowie ein Geschwindigkeitsensor V vorgesehen sind. Bei einem der Temperatursensoren T handelt es sich um das in FIGur 2 beschriebene Prozessgerät D1. Durch bspw. einen Mauszeiger, kann eines der Prozessgeräte ausgewählt werden und dadurch die Zusatzinformation zu dem Prozessgerät, in diesem Fall zu einem der Temperatursensoren T, abgerufen werden. Vorliegend sind die von dem Prozessgerät unterstützten Datenformate, vgl. FIGur 4, und eine fotographische Aufnahme des Standorts des Prozessgerätes D in der Anlage A in dem Anlagenmodell bzw. dem Datenmodell und/oder deren graphischer Darstellung enthalten.

Das erfasste Abbild AB2, und bevorzugt die Position des Prozessgerätes, die Kennung des Prozessgerätes und/oder die Zusatzinformationen des Prozessgerätes können somit, bevorzugt über das zugeordnete Element, das bspw. das entsprechende Prozessgerät repräsentiert, des Anlagenmodells AN abgerufen werden.

Somit können Kontextinformation zu CM-Lösungen im IIoT-Umfeld, ohne die eine sinnvolle Analyse der zugehörigen (prozessbezogenen) Daten schwer durchführbar ist, bereitgestellt werden. Denn je größer die Anzahl der industriellen Anwendungen ist, desto schwieriger ist die Zuordnung von Datenpunkten und die Auswertung von Daten. Ohne semantische Bedeutung der Daten und ohne örtliche Zuordnung und/oder physische Repräsentation ist eine sinnvolle Analyse kaum möglich. Durch die automatische Bereitstellung von Kontextinformationen kann erheblich an Zeit bei der Erstellung des Daten bzw. Anlagenmodells und der Analyse desselben eingespart werden. Parallel ist es möglich, mit weniger technischen Experten mehr CM-Anwendungen parallel zu betreuen.

Bei dem Daten- bzw. Anlagenmodell AN muss es sich nicht, wie in FIGur 5 dargestellt, um ein graphisches Modell handeln. Vielmehr ist es möglich, dass das Datenmodell bzw. das Anlagenmodell AN in bspw. Programmcode umgesetzt ist und zur Durchführung der in dem Programmcode umgesetzten Anweisungen auf die Zusatzinformation, wie bspw. ein von dem Prozessgerät unterstütztes Datenformat, zurückgegriffen wird.

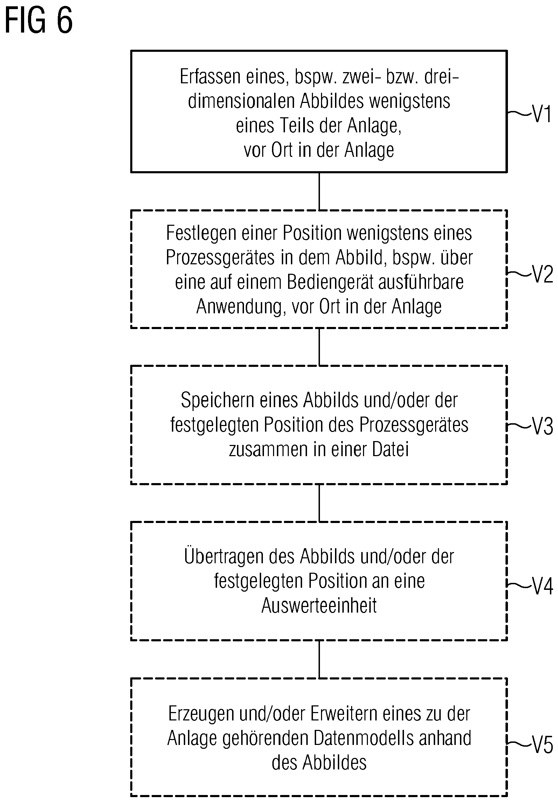

FIG. 6 zeigt eine schematische Darstellung einer Ausführungsform zur Durchführung eines Verfahrens, bspw. vermittels eines Bediengerätes, zur Überwachung einer industriellen Anlage.

Dabei wird in einem Schritt V1 vor Ort in der Anlage ein, bspw. zwei- bzw. dreidimensionales, Abbild wenigstens eines Teils der Anlage erfasst.

In einem Schritt V2 kann eine Position wenigstens eines Prozessgerätes in dem Abbild, bspw. über eine auf einem Bediengerät ausführbare Anwendung, festgelegt werden.

In einem Schritt V3 kann das Abbild und die festgelegte Position des Prozessgerätes zusammen in einer Datei gespeichert werden.

In einem Schritt V4 kann das Abbild und die festgelegte Position des Prozessgerätes an eine Auswerteeinheit übertragen werden. Beispielsweise kann dazu die zuvor gespeicherte Datei an die Auswerteeinheit übertragen werden.

In einem Schritt V5 kann ein zu der Anlage gehörendes Datenmodell erzeugt und/oder erweitert werden. Das Datenmodell kann dabei beispielsweise einem Prozessgerät in der Anlage zugeordnet werden bzw. zugeordnet sein. Das erfasste Abbild kann also dazu dienen, dass basierend auf dem erfassten Abbild ein zu der Anlage gehörendes Datenmodell, insbesondere zur Überwachung der industriellen Anlage, erzeugt und/oder erweitert wird.

Zumindest die Schritte V2 bis V5 sind dabei optional und müssen nicht alle, insbesondere nicht in der dargestellten Reihenfolge, ausgeführt werden. Insbesondere ist es auch möglich, dass vermittels des Bediengerätes auch nur ein Teil der beschriebenen Schritte ausgeführt und/oder initiiert werden.

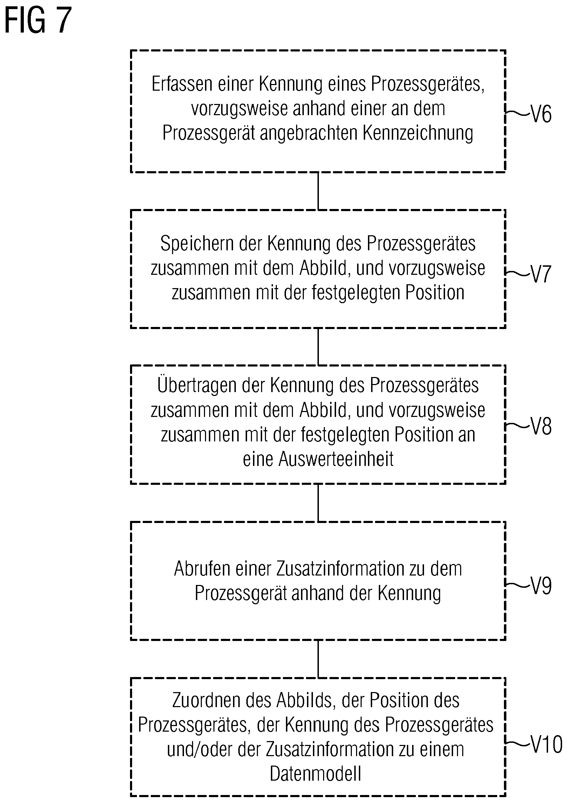

FIG. 7 zeigt eine schematische Darstellung einer weiteren Ausführungsform zur Durchführung eines Verfahrens, bspw. vermittels eines Bediengerätes, zur Überwachung einer industriellen Anlage.

In einem Schritt V6 kann eine Kennung eines Prozessgerätes, vorzugsweise anhand einer an dem Prozessgeräte angebrachten Kennzeichnung, wie bspw. einem QR-Code, erfasst werden.

In einem Schritt V7 kann die Kennung des Prozessgerätes zusammen mit dem Abbild, und vorzugsweise zusammen mit der festgelegten Position, gespeichert werden.

In einem Schritt V8 kann die Kennung des Prozessgerätes zusammen mit dem Abbild, und vorzugsweise zusammen mit der festgelegten Position, an eine Auswerteeinheit übertragen werden.

In einem Schritt V9 kann anhand der Kennung Zusatzinformationen, wie bspw. ein Messbereich, ein Messwert, ein Datenformat und/oder ein Datentyp, zu dem Prozessgerät, bspw. aus einer Datenbank mit Zusatzinformationen zu verschiedenen Prozessgeräten, abgerufen werden.

In einem Schritt V10 kann das Abbild, die Position des Prozessgerätes, die Kennung des Prozessgerätes und/oder die Zusatzinformationen zu dem Prozessgerät einem Datenmodell, wie bspw. einer Datenquelle, z.B. einer Messstelle eines Anlagenmodells, zugeordnet werden.

Ferner kann ein Computerprogramm mit Programmcodemitteln vorgesehen sein, welche Programmcodemittel, wenn sie ausgeführt werden, zum Ausführen eines oder mehrerer der Schritte V1 bis V10 dienen.

Die einer oder mehrere der Schritte V6 bis V10 können dabei ergänzend zu einem der Schritte V1 bis V5 ausgeführt werden. Ferner können die Schritte in einer anderen als der in FIGur 7 dargestellten Reihenfolge ausgeführt werden.

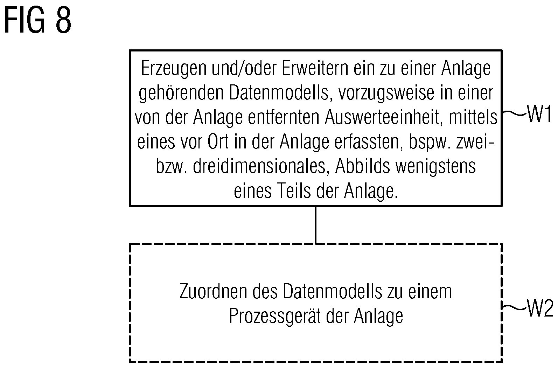

FIG. 8 zeigt eine schematische Darstellung einer Ausführungsform zur Durchführung eines Verfahrens, bspw. vermittels einer Auswerteeinheit, zur Überwachung einer industriellen Anlage.

In einem Schritt W1 kann mittels eines vor Ort in der Anlage erfassten, bspw. zwei- bzw. dreidimensionales, Abbilds wenigstens eines Teils der Anlage ein zu der Anlage gehörendes Datenmodell, vorzugsweise in einer von der Anlage entfernten Auswerteeinheit, erzeugt und/oder erweitert werden.

In einem Schritt W2 kann ein Datenmodell zu einem Prozessgerät der Anlage zugeordnet werden bzw. kann ein Prozessgerät einem Datenmodell zugeordnet werden.

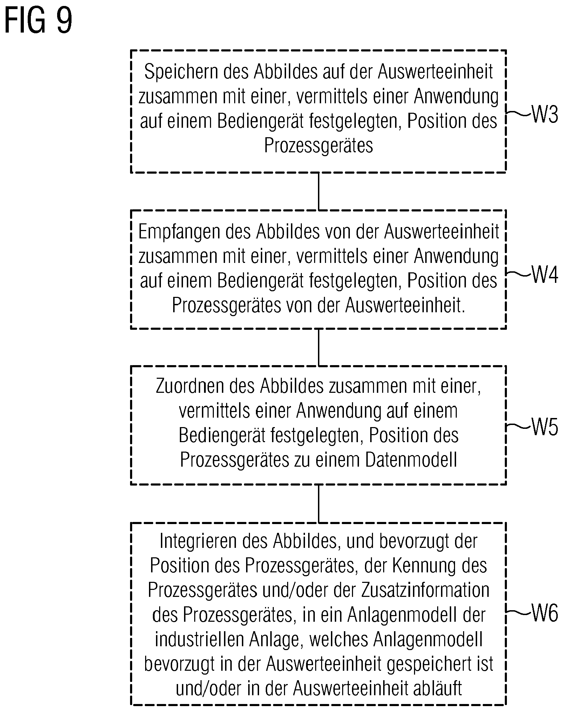

FIG. 9 zeigt eine schematische Darstellung einer weiteren Ausführungsform zur Durchführung eines Verfahrens, bspw. vermittels einer Auswerteeinheit, zur Überwachung einer industriellen Anlage.

Einer oder mehrere der Schritte W3 bis W6 können dabei ergänzend zu einem der Schritte W1 bis W2 ausgeführt werden. Ferner können die Schritte in einer anderen als der in FIG. 9 dargestellten Reihenfolge ausgeführt werden.

In einem Schritt W3 kann das Abbild auf der Auswerteeinheit zusammen mit einer, vermittels einer Anwendung auf einem Bediengerät festgelegten, Position des Prozessgerätes gespeichert werden.

In einem Schritt W4 kann das Abbild von der Auswerteeinheit zusammen mit einer, vermittels einer Anwendung auf einem Bediengerät festgelegten, Position des Prozessgerätes von der Auswerteeinheit empfangen werden.

In einem Schritt W5 kann das Abbild zusammen mit einer, vermittels einer Anwendung auf einem Bediengerät festgelegten, Position des Prozessgerätes einem Datenmodell zugeordnet werden.

In einem Schritt W6 kann das Abbild, und bevorzugt die Position des Prozessgerätes, die Kennung des Prozessgerätes und/ oder die Zusatzinformation des Prozessgerätes, in ein Anlagenmodell der industriellen Anlage, welches Anlagenmodell bevorzugt in der Auswerteeinheit gespeichert ist und/oder in der Auswerteeinheit abläuft, integriert werden.

Ferner kann ein Computerprogramm mit Programmcodemitteln vorgesehen sein, welche Programmcodemittel, wenn sie ausgeführt werden, zum Ausführen eines oder mehrerer der Schritte W1 bis W6 dienen.

Ein oder mehrere der vorgenannten in Zusammenhang mit den FIGuren 6 bis 9 geschilderten Schritte können dabei wiederholt werden, bspw. um mehrere Prozessgeräte in einer Anlage zu erfassen.

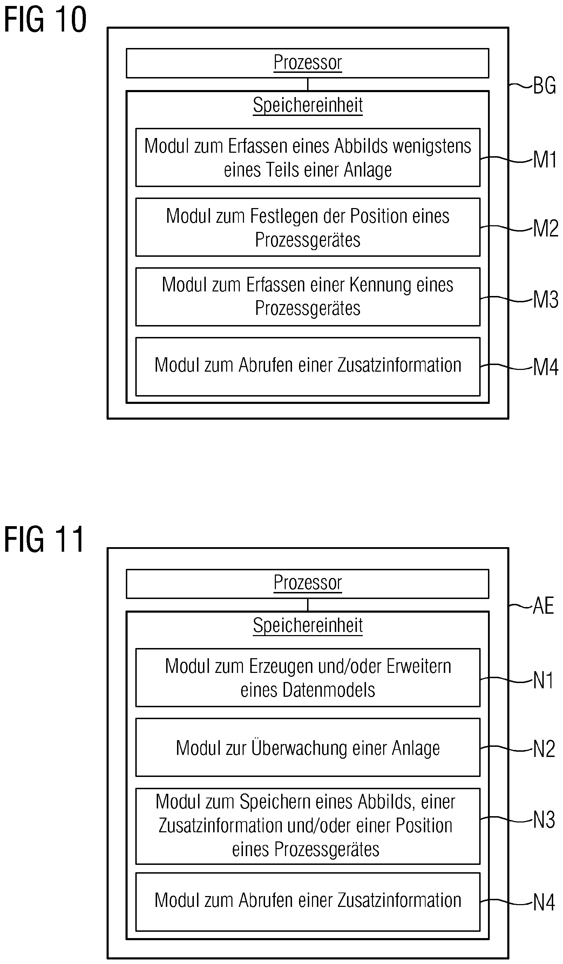

FIG. 10 zeigt eine schematische Darstellung eines Bediengerätes BG zur Durchführung eines Verfahrens zur Überwachung einer industriellen Anlage.

Das Bediengerät BG kann zum Ausführen einer oder mehrerer Schritte des in FIGuren 1 bis 9 beschriebenen Verfahrens ausgelegt sein. Das Bediengerät BG kann zu diesem Zweck beispielsweise über einen Prozessor und eine Speichereinheit verfügen. In der Speichereinheit können zudem Module zum Ausführen einer oder mehrerer der Schritte V1 bis V10 vorhanden sein.

Beispielsweise kann das Bediengerät ein Modul M1 aufweisen, das zum Erfassen eines Abbilds wenigstens eines Teils einer Anlage dient. Das Bediengerät BG kann ferner ein Modul M2 aufweisen, zum Festlegen der Position eines Prozessgerätes dient. Das Bediengerät BG kann ferner ein Modul M3 aufweisen, das zum Erfassen einer Kennung eines Prozessgerätes dient. Das Bediengerät BG kann ferner ein Modul M4 aufweisen, das zum Abrufen einer Zusatzinformation dient. Das Bediengerät BG kann auch über weitere nicht gezeigte Module verfügen, die zur Ausführung der üblichen Funktionalitäten eines Bediengerätes, wie bspw. Anzeige und/oder Editieren von Messwerten bzw. Parametern, bspw. eines Prozessgerätes, dienen.

FIG. 11 zeigt eine schematische Darstellung einer Auswerteeinheit AE zur Durchführung eines Verfahrens zur Überwachung einer industriellen Anlage.

Die Auswerteeinheit AE kann zum Ausführen einer oder mehrerer Schritte des in FIGuren 1 bis 9 beschriebenen Verfahrens ausgelegt sein. Die Auswerteeinheit AE kann zu diesem Zweck beispielsweise über einen Prozessor und eine Speichereinheit verfügen. In der Speichereinheit können zudem Module zum Ausführen einer oder mehrerer der Schritte W1 bis W6 vorhanden sein.

Die Auswerteeinheit AE kann bspw. ein Modul N1 aufweisen das zum Erzeugen und/oder Erweitern eines Datenmodels dient. Die Auswerteeinheit AE kann zudem ein Modul N2 aufweisen, das zur Überwachung einer Anlage dient. Die Auswerteeinheit AE kann zudem ein Modul N3 aufweisen, das zum Speichern eines Abbilds, einer Zusatzinformation und/oder einer Position eines Prozessgerätes dient. Die Auswerteeinheit AE kann zudem ein Modul N4 aufweisen, das zum Abrufen einer Zusatzinformation dient.

Die Auswerteeinheit AE kann auch über weitere nicht gezeigte Module verfügen, die zur Ausführung der üblichen Funktionalitäten einer Auswerteeinheit, wie bspw. Ausführen eines Anlagenmodells und/oder Anzeige und/oder Editieren von Messwerten bzw. Parametern, bspw. eines Prozessgerätes, dienen.

## Patentansprüche

1. Verfahren zum Erzeugen eines Datenmodells (AM) zur Überwachung einer industriellen Anlage (A),
wobei vor Ort in der Anlage (A) ein, bspw. zwei- bzw. dreidimensionales, Abbild (AB1, AB2) wenigstens eines Teils der Anlage (A) erfasst wird (V1),
wobei das Abbild (AB1, AB2) dazu dient, ein zu der Anlage (A) gehörendes Datenmodell (AM) zu erzeugen und/oder zu erweitern (V5).

2. Verfahren nach dem vorherigen Anspruch,
wobei, bevorzugt vor Ort in der Anlage (A), eine Position wenigstens eines Prozessgerätes (D1) in dem Abbild (AB1, AB2), bspw. über eine auf einem Bediengerät (BG) ausführbare Anwendung, festgelegt wird,
wobei vorzugsweise das Abbild (AB1, AB2) und die festgelegte Position des Prozessgerätes (D1) zusammen in einer Datei gespeichert werden und/oder an eine Auswerteeinheit (AE) übertragen werden.

3. Verfahren nach einem der vorherigen Ansprüche,
wobei eine Kennung eines Prozessgerätes (D1), vorzugsweise anhand einer an dem Prozessgeräte angebrachten Kennzeichnung (K), wie bspw. einem QR-Code, erfasst wird,
wobei bevorzugt die Kennung des Prozessgerätes (D1) zusammen mit dem Abbild (Ab1, AB2), und vorzugsweise zusammen mit der festgelegten Position, gespeichert und/oder an eine Auswerteeinheit (AE) übertragen wird.

4. Verfahren nach einem der vorherigen Ansprüche,
wobei anhand der Kennung Zusatzinformationen, wie bspw. ein Messbereich, ein Messwert, ein Datenformat und/oder ein Datentyp, zu dem Prozessgerät (D1), bspw. aus einer Datenbank mit Zusatzinformationen zu verschiedenen Prozessgeräten, abgerufen werden.

5. Verfahren nach einem der vorherigen Ansprüche,
wobei das Abbild (AB1, AB2), die Position des Prozessgerätes (D1), die Kennung des Prozessgerätes und/oder die Zusatzinformationen zu dem Prozessgerät (D1) einem Datenmodell (AM), wie bspw. einer Datenquelle, z.B. einer Messstelle eines Anlagenmodells, zugeordnet wird.

6. Verfahren zum Erzeugen eines Datenmodells (AM) zur Überwachung einer industriellen Anlage (A),
wobei mittels eines vor Ort in der Anlage (A) erfassten, bspw. zwei- bzw. dreidimensionales, Abbilds (AB1, AB2) wenigstens eines Teils der Anlage (A) ein zu der Anlage (A) gehörendes Datenmodell (AM), vorzugsweise in einer von der Anlage entfernten Auswerteeinheit (AE), erzeugt und/oder erweitert wird.

7. Verfahren nach dem vorherigen Anspruch,
wobei das Datenmodell (AM) einem Prozessgerät (D1) der Anlage (A) zugeordnet wird und wobei besonders bevorzugt das Datenmodell (AM) Teil eines Anlagenmodells der industriellen Anlage (A) ist.

8. Verfahren nach einem der vorherigen Ansprüche 6 oder 7, wobei das Abbild (AB1) zusammen mit einer, vermittels einer Anwendung auf einem Bediengerät (BG) festgelegten, Position des Prozessgerätes (D1) gespeichert und/oder von der Auswerteeinheit (AE) empfangen und bevorzugt dem Datenmodell (AM) zugeordnet wird.

9. Verfahren nach einem der vorherigen Ansprüche 6 bis 8, wobei eine Kennung eines Prozessgerätes (D1), vorzugsweise anhand einer an dem Prozessgeräte (D1) angebrachten Kennzeichnung (K), wie bspw. einem QR-Code, erfasst wird, wobei bevorzugt die Kennung des Prozessgerätes (D1) zusammen mit dem Abbild (AB1, AB2), und vorzugsweise zusammen mit der festgelegten Position, gespeichert und/oder von der Auswerteeinheit (AE) empfangen wird und bevorzugt dem Datenmodell (AM) zugeordnet wird.

10. Verfahren nach einem der vorherigen Ansprüche 6 bis 9, wobei das Datenmodell (AM) vermittels der Kennung ermittelten Zusatzinformationen, wie beispielsweise ein Messbereich, ein Messwert, ein Datenformat und/oder ein Datentyp, zu dem Prozessgerät (D1),beispielsweise aus einer Datenbank mit Zusatzinformationen zu verschiedenen Prozessgeräten, erzeugt und/oder erweitert wird.

11. Verfahren nach einem der vorherigen Ansprüche 6 bis 10, wobei das Abbild (AB1, AB2), und bevorzugt die Position des Prozessgerätes (D1), die Kennung des Prozessgerätes (D1) und/oder die Zusatzinformationen des Prozessgerätes (D1), in ein Anlagenmodell der industriellen Anlage, welches Anlagenmodell bevorzugt in der Auswerteeinheit (AE) gespeichert ist und/oder in der Auswerteeinheit (AE) abläuft, integriert wird.

12. Verfahren nach einem der vorherigen Ansprüche 6 bis 11, wobei die Position des Prozessgerätes (D1), die Kennung des Prozessgerätes (D1) und/oder die Zusatzinformationen des Prozessgerätes (D1) einer Datenquelle, wie beispielsweise einer Messstelle, des Anlagenmodells (AM) zugeordnet wird.

13. Vorrichtung, vorzugsweise Bediengerät (BG), zur Durchführung der Verfahrensschritte nach einem der Ansprüche 1 bis 6.

14. Vorrichtung, vorzugsweise Auswerteeinheit (AE), zur Durchführung der Verfahrensschritte nach einem der Ansprüche 7 bis 12.

15. Anordnung umfassend eine Vorrichtung nach Anspruch 13 sowie eine Vorrichtung nach Anspruch 14.
